# EUROPÄISCHE PATENTSCHRIFT

(11) **EP 2 615 443 B1**
(45) Veröffentlichungstag und Bekanntmachung des Hinweises auf die Patenterteilung: **01.06.2022**
(21) Anmeldenummer: 12151309.7
(22) Anmeldetag: 16.01.2012
(51) Int. Cl.: G01N 1/36, G02B 21/34, G01N 1/28, G02B 21/00

(54) **VERFAHREN ZUR AUFBEREITUNG EINER GEWEBEPROBE**
METHOD FOR PREPARING A TISSUE SAMPLE
PROCÉDÉ DE PRÉPARATION D'UN ÉCHANTILLON DE TISSU

(43) Veröffentlichungstag der Anmeldung: 17.07.2013
(73) Patentinhaber: MAVIG GmbH, 81829 München (DE)
(72) Erfinder: Möhrle, Matthias, 72070 Tübingen (DE)
(74) Vertreter: Schwarz und Baldus Patentanwälte

(56) Entgegenhaltungen:
- WO-A1-00/49392
- JP-A- 6 258 209
- US-A1- 2005 157 386
- US-A1- 2011 292 197
- SARAH ZIEFLE ET AL: "Confocal Laser Scanning Microscopy vs 3-Dimensional Histologic Imaging in Basal Cell Carcinoma", INTERNET CITATION, 1. August 2010 (2010-08-01), Seiten 643-647, XP008152139, DOI: 10.1001/archdermatol.2010.191 Gefunden im Internet: URL:http://archderm.jamanetwork.com/articl e.aspx?articleid=210153 [gefunden am 2012-05-22]

## Beschreibung

Die vorliegende Erfindung betrifft ein Verfahren zur Aufbereitung einer Gewebeprobe für die konfokale Laser-Scanning-Mikroskopie.

Die Erfindung betrifft ferner ein Verfahren zur Untersuchung von Gewebeproben sowie einen Kit zur Aufbereitung einer Gewebeprobe für die konfokale Laser-Scanning-Mikroskopie.

Die konfokale Laser-Scanning-Mikroskopie ist eine Technik, mit der hochauflösende optische Bilder einer Probe erhalten werden können. Es ist hierbei möglich, eine große Anzahl von Bildern in verschiedenen Schärfeebenen aufzunehmen und somit neben der zweidimensionalen Bildinformation auch dreidimensionale Bildinformationen zu erhalten. In hierzu verwendeten Laser-ScanningMikroskopen wird Laserlicht verwendet, unter anderem auch um Fluoreszenzstoffe in einer Probe anzuregen, um somit auch spezifische histologische Informationen zu erhalten.

Neuere Untersuchungen haben nun gezeigt, dass die konfokale Laser-Scanning-Mikroskopie unter anderem effektiv in der Diagnose oder auch der Überwachung der Therapie von verschiedenen Gewebeveränderungen (sowohl gut als auch bösartig) eingesetzt werden kann. Ein Beispiel hierfür ist die Diagnose und Überwachung der Therapie eines Basalzellkarzinoms. Beim Basalzellkarzinom handelt es sich um eine Tumorerkrankung des Epithels der Haut, die insbesondere an der Sonne ausgesetzten Hautstellen, wie z.B. im Gesicht, insbesondere im Bereich der Nase sowie der Stirn und auch der Ohren, auftritt. Die häufigste und augenblicklich auch effektivste Behandlungsform für diesen Tumors ist eine chirurgische Behandlung, wobei der Tumor selbst sowie umliegendes Gewebe ausgeschnitten werden und dann der Schnittrand des ausgeschnittenen Gewebes auf das Vorliegen von Krebszellen hin untersucht wird.

Es haben sich hierbei insbesondere zwei Behandlungsmethoden etabliert. Bei der mikrografischen Chirurgie nach Mohs wird, wie oben beschrieben, der Tumor sowie eine kleine Menge angrenzenden Gewebes ausgeschnitten und die ausgeschnittenen Gewebeproben werden flach auf das Mikrotom eines Kryostaten gepresst und die gefrorenen Schnitte werden dann evaluiert. Wenn dabei in den tiefliegenden Schnitträndern noch Tumorgewebe festgestellt wird, wird die Prozedur wiederholt und es erfolgt eine weitere Runde des Markierens und Ausschneidens. Jede Runde des Entfernens und Untersuchens benötigt dabei etwa 20 bis 45 Minuten.

Die zweite etablierte Technik verwendet ein dreidimensionales histologisches Bildgebungsverfahren, wobei der Tumor sowie das umgebende Gewebe nach vorgegebenen Methoden seziert, mit Hämatoxylin-Eosin angefärbt und in Paraffin eingebettet werden. Je nach dem, wie die Sektion der Gewebeprobe erfolgt, können damit vollständige 3D-Aufnahmen der äußeren Schnittränder der Gewebeprobe erhalten werden. Zum Erhalt der hierbei verwendeten Paraffinschnitte vergehen allerdings im Allgemeinen etwa 20 Stunden.

Die beiden oben beschriebenen Verfahren sind jedoch nicht ohne Nachteile. Insbesondere ist bei der Chirurgie nach Mohs anzumerken, dass aufgrund der Verwendung eines Kryostaten sowie eines Mikrotoms die Gewebeprobe während der Untersuchung zerstört wird, so dass keine weiteren histologischen Untersuchungen möglich sind.

Die dreidimensionale Bildgebung unter Verwendung von SD-Schnitten hat den Nachteil, dass bis zum Erhalt der 3D-Schnitte ein Zeitraum von 20 Stunden vergeht, so dass diese Technik nicht als direkte Kontrolle während einer Operation eingesetzt werden kann. Weiterhin ist aus der JP 6 258209 A ein Verfahren zur Untersuchung einer Gewebeprobe bekannt, wobei die Gewebeprobe auf einer Glasplatte angeordnet wird und wobei Harz auf die dort angeordnete Gewebetrupp Probe getropft wird und anschließend mit UV Licht beleuchtet wird.
Die Veröffentlichung SABAH ZIEFLE ET AL: "Confocal Laser Scanning Microscopy vs 3-Dimensional Histologic Imaging in Basal Cell Carcinoma", INTERNET CITATION, 1. August 2010, Seiten 643-647, XP008152139, ist eine wissenschaftliche Veröffentlichung zum Vergleich der konfokalen Laserscanningmikroskopie und der dreidimensionalen histologischen Bilduntersuchung von Basalzellkarzinomen in Hinblick auf die medizinisch diagnostische Aussagekraft.
Die Druckschrift US 2011/292197 A1 offenbart ein Verfahren im Rahmen der pathologischen Gewebeuntersuchung, bei dem eine Gewebeprobe auf einem Objektträger angeordnet und von einem Abdeckglas abgedeckt ist, mit dem Ziel, Störeinflüsse durch eingeschlossene Luftblasen bei der Bildgebung zu vermeiden.

Um die oben genannten Probleme zu lösen, wurde jetzt versucht, unter Verwendung konfokaler Laser-Mikroskopie eine Technik zu entwickeln, mittels derer auf schnelle Welse die äußeren Schnittränder einer z.B. während der Entfernung eines Basalzellkarzinoms erhaltenen Gewebeprobe auf das Vorhandensein von abnormalen Zellen, insbesondere Krebszellen, hin untersucht werden können, ohne dabei die Probe selbst zu zerstören.

Als ein großes Problem hat sich hierbei erwiesen, die Gewebeprobe so aufzuarbeiten, dass die äußeren Schnittränder gleichmäßig und plan auf dem für die Mikroskopie verwendeten Objektträger aufliegen. Ein direktes Ankleben der Probe an den Objektträger hat sich hierbei als ungeeignet erwiesen, da aufgrund der optischen Eigenschaften des ausgehärteten Klebstoffs es hier zu Artefakten kommt, die eine sichere Diagnose unmöglich machen. Auch eine Fixierung der Gewebeprobe zwischen einem Objektträger und einer Abdeckung mittels Klammern hat sich als ungeeignet erwiesen, zum einen da die Klammer möglicherweise das Gesichtsfeld des Mikroskops stört und zum anderen, da es zum Verrutschen der Klammer kommen kann, was wiederum zu einer Störung bei der Bildaufnahme führt. Auch ein direktes Verkleben des Objektträgers mit der Abdeckung, wobei zwischen der Abdeckung und dem Objektträger die Probe angeordnet ist, hat sich im Allgemeinen als nicht brauchbar erwiesen, da dadurch sehr häufig ein zu hoher Druck auf die Gewebeprobe ausgeübt wird, was zu einer Schädigung der Probe führen kann und wiederum eine sichere Diagnose unmöglich macht.

Es ist somit eine Aufgabe der Erfindung, ein Verfahren zur Aufbereitung einer Gewebeprobe für die konfokale Laser-Scanning-Mikroskopie zu beschreiben, mit dem ein sauberes Aufliegen der peripheren Schnittflächen der Gewebeprobe am Objektträger garantiert wird, ohne dass dabei die Probe beschädigt wird oder dass es während dem Vermessen der Gewebeprobe zu einem Verrutschen kommen kann. Ferner sollte die Gewebeprobe nach Abschluss der Untersuchung auch für weitere Untersuchungen zur Verfügung stehen.

Es ist ferner eine Aufgabe der Erfindung, ein Verfahren zur Untersuchung von Gewebeproben mittels konfokaler Laser-Scanning-Mikroskopie zu beschreiben.

Es ist ferner eine Aufgabe der Erfindung, einen Kit zur Aufarbeitung einer Gewebeprobe für die konfokale Laser-Scanning-Mikroskopie zu beschreiben, mittels dem Gewebeproben so aufbereitet werden können, dass ein sauberes Anliegen der peripheren Schnittränder auf dem Objektträger gewährleistet werden kann, ohne dass die Gewebeprobe dabei beschädigt wird, wobei die Gewebeprobe nach Abschluss der Untersuchung noch für weitere Untersuchungen bereitstehen soll.

Erfindungsgemäß wird die Aufgabe dadurch gelöst, dass ein Verfahren zur Aufbereitung einer Gewebeprobe für die konfokale Laser-ScanningMikroskopie die folgenden Schritte aufweist:
1.) Bereitstellen einer Gewebeprobe 2. ) ggf. Zuschneiden der Gewebeprobe
3. ) Aufbringen der Gewebeprobe auf einen Objektträger
4. ) Anbringen einer Abdeckung über der Gewebeprobe, wobei die Abdeckung mittels einer härtbaren, plastisch verformbaren Masse mit dem Objektträger verbunden wird,
5. ) Aufdrücken der Abdeckung auf die Gewebeprobe mit einer vorgegebenen
   Kraft, und
6. ) Härten der plastisch verformbaren Masse, wobei das Andrücken von Schritt S beibehalten wird und wobei die härtbare, plastisch verformbare Masse ausgewählt ist aus den härtbaren Silikonen und den härtbaren Polyethern, insbesondere ausgewählt ist aus den A-Silikonen und den K-Silikonen

Die an zweiter Stelle genannte Aufgabe wird ferner durch ein Verfahren zur Untersuchung von Gewebeproben gelöst, das die Schritte der Aufbereitung einer Gewebeprobe, wie zuvor beschrieben, und das Untersuchen der aufbereiteten Gewebeprobe mittels konfokaler Laser-Scanning-Mikroskopie aufweist.

Die an dritter Stelle genannte Aufgabe wird durch ein Kit zur Aufbereitung einer Gewebeprobe für die konfokale Laser-Scanning-Mikroskopie gelöst, der Folgendes aufweist, nämlich
eine härtbare, plastisch verformbare Masse, ), die ausgewählt ist aus den härtbaren Silikonen und den härtbaren Polyethern, insbesondere ausgewählt ist aus den A-Silikonen und den K-Silikonen und
eine Anleitung zur Durchführung der zuvor beschriebenen Verfahrens sowie mit zumindest einen Objektträger und zumindest einer Abdeckung.

Die Anmelderin hat nun herausgefunden, dass unter Verwendung einer härtbaren, plastisch verformbaren Masse eine Gewebeprobe zwischen einem Objektträger und einer Abdeckung fixiert werden kann, wobei durch die Verformbarkeit der Masse die Abdeckung so angebracht werden kann, dass ein planes Anliegen der Schnittflächen auf dem Objektträger gewährleistet werden kann. Ferner wird durch die Masse ein Abstand zwischen der Abdeckung und dem Objektträger sichergestellt, so dass der von der Abdeckung und dem Objektträger auf die Gewebeprobe ausgeübte Druck so eingestellt werden kann, dass es hier nicht zu einer Beschädigung der Probe kommt. Abschließend hat sich gezeigt, dass bei diesem Verfahren ferner nach Abschluss der Mikroskopie die Abdeckung und der Objektträger voneinander getrennt werden können, wobei die Probe weitgehend unbeschädigt für weitere Untersuchungen bereitsteht.

Der Ausdruck "eine härtbare, plastisch verformbare Masse" gemäß der Erfindung umfasst hierbei alle festen, jedoch fließfähigen Massen, die - sei es auf chemischem Weg, z.B. durch eine Vernetzungsreaktion, oder sei es auf physikalischem Weg, z.B. durch Abdampfen von Lösungsmittel-, verfestigt werden können, wobei diese durch das Verfestigen eine Klebwirkung entfalten.

Der Ausdruck "Objektträger" und "Abdeckung" gemäß der Erfindung umfasst alle im Wesentlichen flachen transparenten Objekte, die die mikroskopische Untersuchung nicht stören. Der Objektträger und die Abdeckung können unterschiedlich oder im Wesentlichen identisch sein. Im letzteren Fall dienen die Ausdrücke Objektträger und Abdeckung lediglich dazu, die Objekte für ihre Verwendung in dem Verfahren zu unterscheiden.

In einer Ausgestaltung der Erfindung ist die härtbare, plastisch verformbare Masse ausgewählt aus den härtbaren Silikonen und den härtbaren Polyethern, insbesondere aus den A-Silikonen und den K-Silikonen.

Die oben genannten Materialien haben sich insbesondere aufgrund ihres Fließverhaltens sowie auch im Hinblick darauf, dass diese häufig schnell abbinden, in dem Verfahren als besonders vorteilhaft erwiesen. Ferner ist vorteilhaft, dass solche Massen für die verschiedensten Zwecke und Ausführungsformen im Hinblick auf anfängliche Fließfähigkeit und spätere Festigkeit sowie auch im Hinblick auf die Aushärtungszeit bereits kommerziell im Handel sind. Überraschenderweise hat sich insbesondere gezeigt, dass hierbei günstigerweise Materialien eingesetzt werden können, die z.B. im Augenblick als Zahnabformmassen im Handel erhältlich sind.

In einer weiteren Ausgestaltung der Erfindung ist die härtbare, plastisch verformbare Masse transparent.

Die Verwendung einer transparenten Masse ist vorteilhaft, da selbst dann, wenn es an den Rändern der Gewebeprobe zu einer Berührung zwischen der Masse und der Gewebeprobe kommt, wobei eine gewisse Menge der Masse zwischen den Objektträger und der Gewebeprobe eindringt, es noch immer möglich ist, die genaue Position der Probe zu überwachen und eine sinnvolle Messung durchzuführen.

In einer weiteren Ausgestaltung der Erfindung ist die in Schritt 5 und Schritt 6 ausgeübte Kraft kleiner als S N, vorzugsweise kleiner als 2 N, noch bevorzugter kleiner als 1 N und liegt insbesondere zwischen 0,1 und 0,6 N.

Es hat sich gezeigt, dass durch die Ausübung von Kräften in den oben genannten Bereichen zum einen sichergestellt werden kann, dass die Gewebeprobe plan auf dem Objektträger aufliegt, und zum anderen jedoch verhindert wird, dass die Gewebeprobe durch eine Ausübung eines zu hohen Drucks beschädigt wird.

Die gewünschte Kraft kann dabei am einfachsten dadurch ausgeübt werden, dass während des Aufdrückens und des Härtens der plastisch verformbaren Masse in den Schritten S und 6 die Abdeckung einfach durch kleine Gewichte belastet wird, wobei als Faustregel anzusetzen ist, dass ein Gewicht von 100 g eine Kraft von 1 N ausübt.

In einer weiteren Ausgestaltung der Erfindung weist die härtbare, plastisch verformbare Masse im nicht gehärteten Zustand eine Konsistenz vom Typ 0, 1 oder 2 gemäß ISO 4823:2000 auf.

Bei der oben genannten ISO 4823 handelt es sich um eine Norm, die sich mit dentalen Abformmassen befasst. Die vorliegenden Erfinder haben hierbei herausgefunden, dass sich solche dentalen Abformmassen besonders vorteilhaft im Verfahren der vorliegenden Erfindung einsetzen lassen, so dass hierbei auf diese Norm Bezug genommen wird. Eine Konsistenz in den oben genannten Bereichen hat sich als vorteilhaft erwiesen, da es beim Auftragen nicht zu einem übermäßigen Zerfließen kommt, wodurch die Gewebeprobe durch die härtbare, plastisch verformbare Masse verunreinigt werden könnte. Ferner hat diese Konsistenz jedoch auch den Vorteil, dass die Masse dann noch immer formbar ist, ohne dass Kräfte aufgewendet werden müssten, die ggf. die Gewebeprobe beschädigen könnten.

In einer weiteren Ausgestaltung der Erfindung weist die härtbare, plastisch verformbare Masse im gehärteten Zustand eine Endhärte von 40 bis 95 Shore A, vorzugsweise SO bis 90 Shore A und insbesondere von 60 bis 75 Shore A auf.

Es hat sich gezeigt, dass Massen, die in der oben genannten Endhärte aushärten, zum einen stabile und verlässliche Verbindungen zwischen der Abdeckung und dem Objektträger bilden, jedoch auch nicht so hart und spröde werden, dass es ggf. beim Aushärten zu einer Beschädigung der Gewebeprobe kommt.

In einer weiteren Ausgestaltung der Erfindung handelt es sich bei der Gewebeprobe um Hautgewebe.

Wie oben bereits angedeutet, ist die vorliegende Technik insbesondere für die Untersuchung sowie die Behandlung bzw. die Überprüfung der Behandlung von Veränderungen der Haut, insbesondere eines Basalzellkarzinoms, also einer Form des Hautkrebses, sinnvoll, so dass die Verwendung von Hautgewebeproben besonders vorteilhaft ist.

In einer weiteren Ausgestaltung der Erfindung weist das Verfahren nach Schritt 3.) einen weiteren Schritt 3.a.) des Benetzens der Probe mit einer Flüssigkeit, vorzugsweise Wasser oder einem öl, auf.

Diese Ausgestaltung kann bei trockenen Proben vorteilhaft sein, da dadurch sichergestellt werden kann, dass das zur Vermessung der Probe verwendete Laserlicht gleichmäßig zu der Probe gelangt. Es ist einem Fachmann hierbei klar, dass die zur Benetzung der Probe verwendete Flüssigkeit für das zur Vermessung verwendete Laserlicht sowie für die von der Probe ggf. abgegebene Fluoreszenz transparent sein muss. Hierbei haben sich insbesondere Wasser und transparente öle und besonders hochbrechende Mikroskopieöle als vorteilhaft erwiesen.

In einer weiteren Ausgestaltung der Erfindung weist der Kit zumindest einen Objektträger auf, wobei der Objektträger vorzugsweise zumindest eine im Wesentlichen glatte Oberfläche aufweist, wobei auf der einen im Wesentlichen glatten Oberfläche ein aufgerauter Bereich vorhanden ist, der einen Bereich mit einer im Wesentlichen glatten Oberfläche umschließt.

Die Bereitstellung von Objektträgern im Allgemeinen und insbesondere von Objektträgern mit dem beschriebenen aufgerauten Bereich erleichtert die Handhabung des Kits, wobei insbesondere durch den aufgerauten Bereich beim Auftragen der plastisch verformbaren, härtbaren Masse das Zerfließen der Masse vom aufgerauten Bereich auf die glatte Oberfläche, die im Allgemeinen schlechter durch die Masse benetzbar ist als der aufgeraute Bereich, unterdrückt werden kann. Durch den aufgerauten Bereich mit dem darin angeordneten Bereich mit einer glatten Oberfläche kann somit ein Bereich von der Masse freigehalten werden, in den dann die Gewebeprobe eingesetzt werden kann.

Die Bereitstellung eines aufgerauten Bereichs hat ferner noch den Vorteil, dass dadurch die Haftung der plastisch verformbaren Masse an dem Objektträger verbessert werden kann.

In einer weiteren Ausgestaltung der Erfindung weist der Kit zumindest eine Abdeckung auf, wobei diese vorzugsweise zumindest eine im Wesentlichen glatte Oberfläche aufweist, wobei auf der zumindest einen im Wesentlichen glatten Oberfläche ein aufgerauter Bereich vorhanden ist, der einen weiteren Bereich mit einer im Wesentlichen glatten Oberfläche umschließt.

Die Bereitstellung einer Abdeckung und insbesondere einer Abdeckung mit dem oben beschriebenen aufgerauten Bereich hat die gleichen Vorteile wie die Bereitstellung des oben beschriebenen Objektträgers.

Zur Verbesserung der Haftung ist es hier insbesondere vorteilhaft, wenn der aufgeraute Bereich des Objektträgers und der Abdeckung in Form und Größe im Wesentlichen identisch sind, so dass beim Aufsetzen der Abdeckung der aufgeraute Bereich der Abdeckung in Berührung mit der Masse kommt, die auf den aufgerauten Bereich des Objektträgers aufgebracht ist, was zu einer besonders festen Verbindung zwischen der Abdeckung und dem Objektträger führt.

In einer weiteren Ausgestaltung der oben genannten Maßnahme sind der Objektträger und die Abdeckung in Form und Größe im Wesentlichen identisch.

Diese Maßnahme hat den Vorteil, dass diese von der Herstellung besonders einfach ist, da anstatt zwei verschiedene Gegenstände, nämlich einer Abdeckung und einem Objektträger, lediglich ein Gegenstand gefertigt werden muss, der dann sowohl als Objektträger als auch als Abdeckung verwendet werden kann. Im Hinblick darauf ist insbesondere darauf hinzuweisen, dass im vorliegenden Fall sowohl der Objektträger als auch die Abdeckung sowohl gleich als auch unterschiedlich sein können, wobei die zwei verschiedenen Begriffe ggf. lediglich dazu verwendet werden, um die beiden Bauteile, die im Laufe des Verfahrens die Gewebeprobe einschließen, zur Vereinfachung der Beschreibung zu unterscheiden

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand ausgewählter Ausführungsbeispiele in Zusammenhang mit den Zeichnungen näher beschrieben und erläutert. Es zeigen:
- Fig. 1: stark schematisch ein menschliches Gesicht, das von einem Basalzellkarzinom befallen ist,
- Fig. 2: stark schematisch eine ein Basalzellkarzinom aufweisende Gewebeprobe,
- Fig. 3: stark schematisch einen Schritt in der Aufbereitung einer Gewebeprobe für die konfokale Laser-Mikroskopie,
- Fig. 4: stark schematisch einen weiteren Schritt in der Aufbereitung einer Gewebeprobe für die konfokale Laser-Scanning-Mikroskopie,
- Fig. 5: stark schematisch einen weiteren Schritt in der Aufbereitung einer Gewebeprobe für die konfokale Laser-Scanning-Mikroskopie,
- Fig. 6: stark schematisch einen weiteren Schritt in der Aufbereitung einer Gewebeprobe für die konfokale Laser-Scanning-Mikroskopie,
- Fig. 7: stark schematisch einen weiteren Schritt in der Aufbereitung einer Gewebeprobe für die konfokale Laser-Scanning-Mikroskopie,
- Fig. 8: stark schematisch einen weiteren Schritt in der Aufbereitung einer Gewebeprobe für die konfokale Laser-Scanning-Mikroskopie,
- Fig. 9: stark schematisch einen weiteren Schritt in der Aufbereitung einer Gewebeprobe für die konfokale Laser-Scanning-Mikroskopie,
- Fig. 10: stark schematisch einen weiteren Schritt in der Aufbereitung einer Gewebeprobe für die konfokale Laser-Scanning-Mikroskopie,
- Fig. 11: stark schematisch eine Untersuchung einer aufbereiteten Gewebeprobe mittels konfokaler Laser-Scanning-Mikroskopie,
- Fig. 12: stark schematisch einen Kit zur Aufbereitung einer Gewebeprobe für die konfokale Laser-Scanning-Mikroskopie.

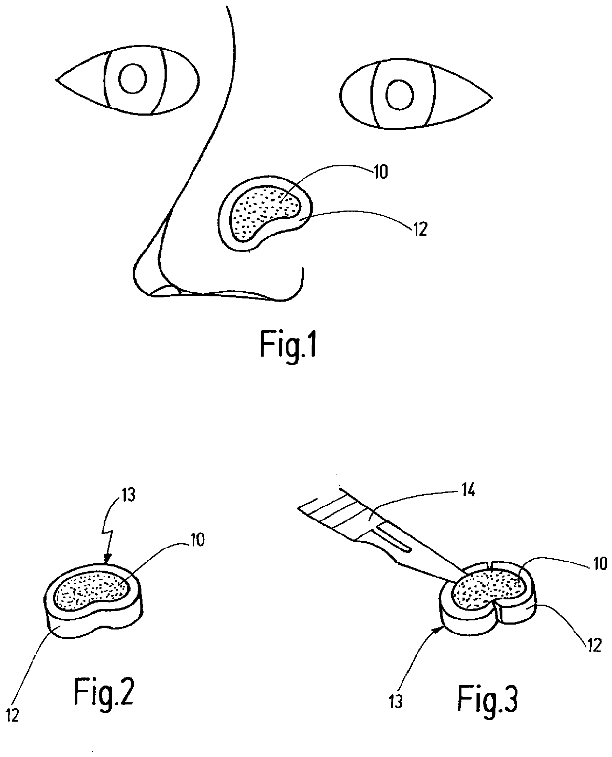

In Fig. 1 ist ein schematisch in einem Gesicht eines Patienten dargestelltes Basalzellkarzinom mit der Bezugsziffer 10 bezeichnet.

Dieses Basalzellkarzinom 10 ist von ebenfalls auszuschneidendem Gewebe 12 umgeben, welches im vorliegenden Fall markiert und dann ausgeschnitten wird, um sicherzustellen, dass eine größtmögliche Menge an Tumorzellen entfernt wird, um ein Wiederauftreten des Tumors zu verhindern.

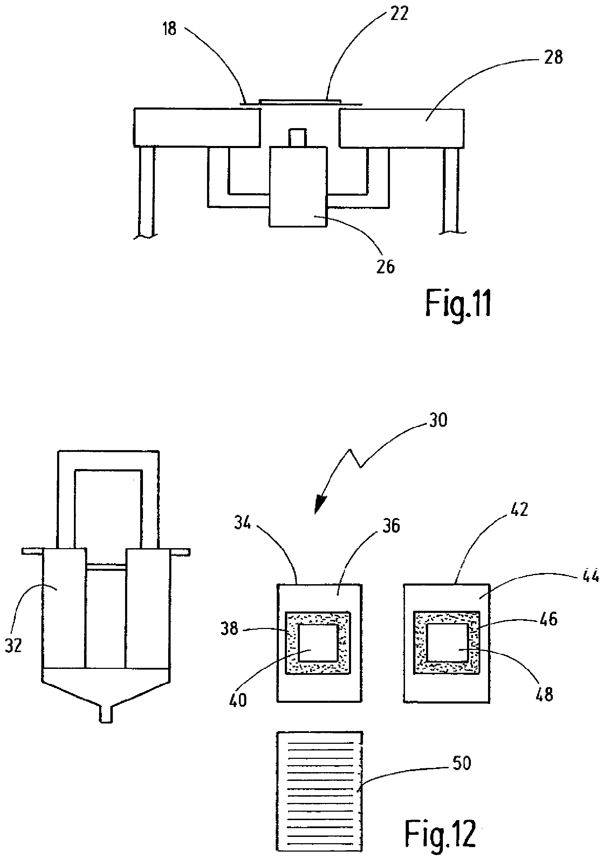

Die nach der Exzision des Tumors bereitgestellte Gewebeprobe 13 ist in Fig. 12 dargestellt.

Zur Untersuchung der äußeren Schnittränder, welche dem tiefstliegenden entnommenen Gewebe entsprechen, muss die Gewebeprobe 13 nun im vorliegenden Fall zugeschnitten werden, um ein Aufliegen der Schnittränder auf dem Objektträger zu ermöglichen. Im vorliegenden Fall wird hierbei ein Verfahren des Zuschneidens der Gewebeprobe 13 beschrieben, das als so genannte Muffin-Methode bezeichnet wird. Das vorliegende Verfahren ist jedoch nicht auf diese Muffin-Methode beschränkt, sondern es kann hierbei jegliche, dem Fachmann bekannte Methode verwendet werden, um die Gewebeprobe zuzuschneiden, wobei die einfachste Methode lediglich aus einem in Scheiben Schneiden der Gewebeprobe 13 besteht. Bei der im vorliegenden Fall angewendeten Muffin-Methode wird nun mittels eines Skalpells 14 ein Schnitt um das Basalzellkarzinom 10 gemacht, um das umgebende Gewebe 12 von dem Basalzellkarzinom 10 zu trennen. Es ist hierbei jedoch anzumerken, dass dieser Schnitt nicht vollständig durch die Gewebeprobe 13 durchgeht, sondern, wie z.B. im vorliegenden Fall, lediglich zu etwa zwei Drittel der Dicke in die jeweilige Probe eintaucht. Ferner werden noch an zwei gegenüberliegenden Seiten der Gewebeprobe 13 Einschnitte in das umgebende Gewebe 12 gemacht, die durch das gesamte umgebende Gewebe 12 hindurchgehen und bis zum Basalzellkarzinom 10 hinreichen.

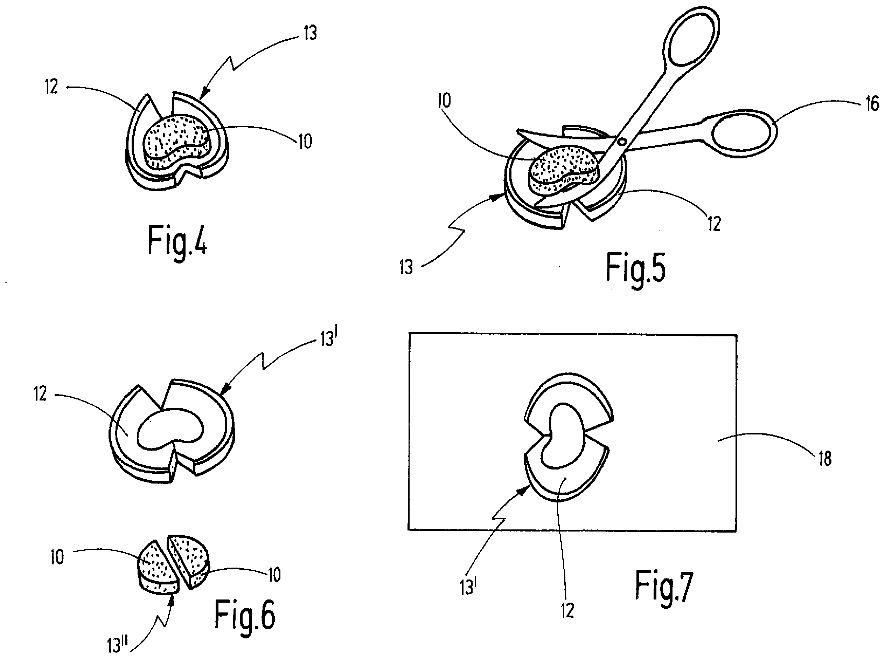

Nach den in Fig. 3 gezeigten Schnitten kann nun, wie in Fig. 4 gezeigt, das umgebende Gewebe 12 von dem Basalzellkarzinom 10 nach unten weggefaltet werden, wie z.B. eine Papierform von einem Muffin abgezogen werden kann, woher auch der Name für diese Technik stammt.

In einem nächsten Schritt wird nun, wie in Fig. 5 dargestellt, z.B. mit einer chirurgischen Schere 16 das Basalzellkarzinom 10 auch unten von dem umliegenden Gewebe 12 getrennt, um zwei Gewebeproben zu erhalten, wie z.B. in Fig. 6 dargestellt, wobei eine Gewebeprobe 13' im Wesentlichen aus umliegendem Gewebe 12 besteht und die andere Gewebeprobe 13" im Wesentlichen aus Basalzellkarzinom 10 besteht. Um das Basalzellkarzinom 10 über seine gesamte Dicke untersuchen zu können, wobei sichergestellt werden soll, dass dieses sauber auf einem Objektträger aufliegt, wurde das Basalzellkarzinom 10, wie in Fig. 6 dargestellt, noch einmal in der Mitte durchgeschnitten.

Die so erhaltene Gewebeprobe 13' kann nun, wie in Fig. 7 beispielhaft für das umgebende Gewebe 12 dargestellt, auf einem Objektträger 18 angeordnet werden, wobei in Fig. 7 eine Draufsicht dargestellt ist. In Fig. 7 und den folgenden Figuren wird beispielhaft und der Einfachheit halber lediglich die Weiterverarbeitung der aus dem umgebenden Gewebe 12 stammenden Gewebeprobe 13' gezeigt und beschrieben. Die aus dem Basalzellkarzinom 10 resultierenden Gewebeproben 13" können analog verarbeitet werden, wobei für jede Probe ein separates Präparat hergestellt wird. In diesem Fall erfolgt die Beobachtung der Probe dann von der Rückseite, also durch den Objektträger 18 hindurch. In einem nächsten Schritt wird nun um die Gewebeprobe 13' ein Ring aus einer härtbaren, plastisch verformbaren Masse 20 aufgebracht, wobei es sich im vorliegende Fall um eine dentale Abformmasse handelt, die von der Firma Dreve unter dem Markennamen Regofix transparent im Handel erhältlich ist. In Fällen, in denen es sich bei der Gewebeprobe um eine besonders trockene Probe handelt, kann die Probe zu diesem Zeitpunkt mit einer Flüssigkeit, z.B. Wasser oder einem Öl, benetzt werden, um später bei der Vermessung der Probe eine gute Transmission des Laserlichts sicherzustellen.

In einem nächsten Schritt wird nun auf den Objektträger 18 die härtbare, plastische formbare Masse 20 sowie die Gewebeprobe 13' aus dem umgebenden Gewebe 12, eine Abdeckung 22 aufgebracht. Im vorliegende Fall ist die Abdeckung 22 etwas kleiner dargestellt als der Objektträger 18. Dieses dient im vorliegenden Fall aber hauptsächlich zu einer besseren Visualisierung der Abdeckung. Das Größenverhältnis zwischen Objektträge 18 und Abdeckung 22 ist für das Verfahren hier vollkommen unerheblich und im Hinblick auf die Einfachheit wird in der größten Anzahl der Fälle wohl eine Abdeckung 22 verwendet werden, die die gleiche Größe aufweist wie der Objektträger 18.

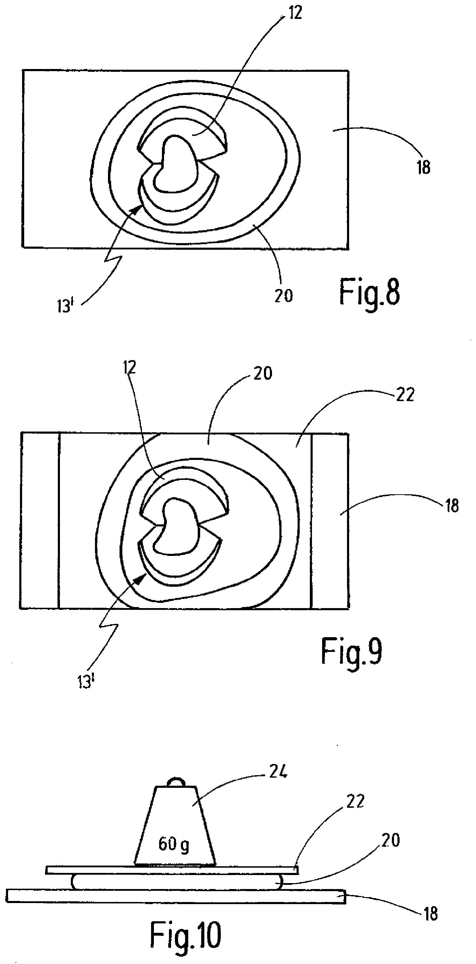

In einem nächsten Schritt und wie in Fig. 10 von der Seite aus dargestellt, wird nun auf die Abdeckung 22 z.B. mittels eines Gewichts 24 ein Druck ausgeübt, wodurch sowohl die hier in Fig. 10 nicht sichtbare Gewebeprobe 13' wie auch die härtbare, plastische formbare Masse 20 zwischen der Abdeckung 22 und dem Objektträger 18 etwas deformiert werden, wodurch ein planes Anliegen der Oberfläche der Gewebeprobe 13' an dem Objektträger 18 sichergestellt wird. Da im vorliegenden Fall zum Andrücken ein Gewicht von 60 g verwendet wird, wird hier eine Kraft von ca. 0,6 N aufgewendet. Nach dem Aushärten der Masse 20, was nach etwa zwei Minuten erreicht wird, kann das Gewicht 24 entfernt werden und die Probe ist dann zur Vermessung mit einem konfokalen Laser-Scanning-Mikroskop, wie dieses in Fig. 11 mit der Bezugsziffer 26 versehen ist, bereit. Bei dem konfokalen Laser-Scanning-Mikroskop 26 handelt es sich um ein so genanntes inverses Mikroskop, bei dem die zu verwendende Probe auf einem Tisch 28 angeordnet ist und von unten durch den Objektträger 18 vermessen wird. Diese Anordnung hat den Vorteil, dass dieses wiederum das plane Anliegen der Gewebeprobe 13' an dem Objektträger 18 fördert. Ein solches inverses konfokales Laser-Scanning-Mikroskop 26 ist z.B. von der Firma Mavig erhältlich.

Nach Abschluss der Untersuchung, wie in Fig. 11 dargestellt, kann dann die Abdeckung 22 wieder vom Objektträger 18 entfernt werden, wobei dann die Gewebeprobe 13' noch für weitere histologische Untersuchungen zur Verfügung steht.

In Fig. 12 ist stark schematisch ein Kit zur Verwendung in dem oben beschriebenen Verfahren in seiner Gesamtheit mit der Bezugsziffer 30 bezeichnet.

Der Kit weist eine plastisch verformbare Masse, hier in Form einer in einem Applikator 32 enthaltenen Zweikomponentenmasse, auf. Die Verwendung von Zweikomponentenmassen ist aufgrund dessen, dass diese im Allgemeinen in kürzeren Zeiten aushärten im vorliegenden Fall häufig vorteilhaft.

Der Kit weist ferner einen Objektträger 34 auf. Dieser Objektträger 34 ist durchsichtig und aus Glas hergestellt und weist auf der hier als Oberseite definierten Seite eine glatte Oberfläche 36 auf. Innerhalb dieser glatten Oberfläche 36 ist ein aufgerauter Bereich 38 im vorliegenden Fall durch Sandstrahlen aufgebracht. Dieser aufgeraute Bereich 38 ist im vorliegenden Fall in etwa quadratisch und umschließt einen weiteren Bereich 40 mit einer glatten Oberfläche.

Der aufgeraute Bereich 38 ist dazu vorgesehen, dass während des oben beschriebenen Verfahrens hierauf die härtbare, plastisch verformbare Masse aufgetragen wird, wobei die Aufgerautheit zum einen zu einer besseren Verbindung zwischen der ausgehärteten Masse und dem Objektträger führt und zum anderen auch dazu führt, dass ein Auslaufen der Masse in die Bereiche mit glatter Oberfläche, auf denen die härtbare, plastisch verformbare Masse, eine geringe Benetzbarkeit aufweist, verhindert wird.

Der Kit weist ferner eine Abdeckung 42 auf, die im vorliegenden Fall im Wesentlichen identisch zum Objektträger 34 ist. Die Abdeckung 42 weist wiederum eine im Wesentlichen glatte Oberfläche 44 auf, die lediglich aufgrund der geplanten Verwendung hier als Unterseite bezeichnet wird. An diesem Bereich mit einer glatten Oberfläche 44 ist wiederum ein aufgerauter Bereich 46 angebracht, der einen weiteren Bereich mit glatter Oberfläche 48 umschließt.

Im allgemeinen Gebrauch wird nun die Gewebeprobe auf den Bereich mit einer glatten Oberfläche 40 des Objektträgers 34 aufgebracht. Danach wird die härtbare, plastisch verformbare Masse aus dem Applikator 32 auf den aufgerauten Bereich 38 aufgebracht, wobei die letztgenannten Schritte auch in umgekehrter Reihenfolge durchgeführt werden können. Danach wird die Abdeckung 42 so auf den Objektträger 34 gelegt, dass der aufgeraute Bereich 46 mit der auf den aufgerauten Bereich 38 aufgebrachten Masse in Berührung kommt und dann wie oben beschrieben angedrückt. Aufgrund des Vorliegens der beiden aufgerauten Bereiche kommt es zu einer besonders sicheren Verbindung zwischen dem Objektträger und der Abdeckung.

Abschließend weist der Kit noch eine Anleitung 50 zur Durchführung des oben beschriebenen Verfahrens auf.

## Patentansprüche

1. Verfahren zur Aufbereitung einer Gewebeprobe für die konfokale Laser-Scanning-Mikroskopie, das die folgenden Schritte aufweist:
1.) Bereitstellen einer Gewebeprobe (13, 13', 13")
2.) ggf. Zuschneiden der Gewebeprobe (13, 13', 13")
3.) Aufbringen der Gewebeprobe auf einen Objektträger (18; 34)
4.) Anbringen einer Abdeckung (22; 42) über der Gewebeprobe (13, 13', 13"), wobei die Abdeckung (22; 42) mittels einer härtbaren, plastisch verformbaren Masse (20) mit dem Objektträger (18; 34) verbunden wird,
5.) Aufdrücken der Abdeckung (22; 42) auf die Gewebeprobe (13, 13', 13") mit einer vorgegebenen Kraft, und
6.) Härten der plastisch verformbaren Masse (20), wobei das Andrücken von Schritt 5 beibehalten wird,
wobei die härtbare, plastisch verformbare Masse (20) ausgewählt ist aus den härtbaren Silikonen und den härtbaren Polyethern, insbesondere ausgewählt ist aus den A-Silikonen und den K-Silikonen.

2. Verfahren nach Anspruch 1, **dadurch gekennzeichnet, dass** die härtbare, plastisch verformbare Masse (20) transparent ist.

3. Verfahren nach Anspruch 1 oder 2, **dadurch gekennzeichnet, dass** die in Schritt 5 und Schritt 6 ausgeübte Kraft kleiner als 5 N, vorzugsweise kleiner als 2 N, noch bevorzugter kleiner als 1 N ist und insbesondere zwischen 0.1 und 0.6 N liegt.

4. Verfahren nach einem der Ansprüche 1 bis 3, **dadurch gekennzeichnet, dass** die härtbare, plastisch verformbare Masse (20) im nicht gehärteten Zustand eine Konsistenz vom Typ 0, 1 oder 2 gemäß ISO 4823:2000 aufweist.

5. Verfahren nach einem der Ansprüche 1 bis 4, **dadurch gekennzeichnet, dass** die härtbare, plastisch verformbare Masse (20) im gehärteten Zustand eine Endhärte von 40 bis 95 Shore A, vorzugsweise von 50 bis 90 Shore A und insbesondere von 60 bis 75 Shore A aufweist.

6. Verfahren nach einem der Ansprüche 1 bis 5, **dadurch gekennzeichnet, dass** die Gewebeprobe (13, 13', 13") Hautgewebe aufweist.

7. Verfahren nach einem der Ansprüche 1 bis 6, **dadurch gekennzeichnet, dass** es nach Schritt 3.) einen weiteren Schritt 3.a.) des Benetzens der Probe mit einer Flüssigkeit, vorzugsweise Wasser oder einem Öl, aufweist.

8. Verfahren zur Untersuchung von Gewebeproben umfassend die Schritte der Aufbereitung einer Gewebeprobe (13, 13', 13") gemäß des Verfahrens nach einem der Ansprüche 1 bis 7 und Untersuchen der aufbereiteten Gewebeprobe (13, 13', 13") mittels konfokaler Laser-Scanning-Mikroskopie.

9. Kit zur Aufbereitung einer Gewebeprobe für die konfokale Laser-Scanning-Mikroskopie, der Folgendes aufweist, nämlich:
- eine härtbare, plastisch verformbare Masse (20), die ausgewählt ist aus den härtbaren Silikonen und den härtbaren Polyethern, insbesondere ausgewählt ist aus den A-Silikonen und den K-Silikonen und
- eine Anleitung (50) zur Durchführung des Verfahrens nach einem der Ansprüche 1 bis 8,
- zumindest einen Objektträger (18; 34), und
- zumindest eine Abdeckung (22; 42).

10. Kit nach Anspruch 9, **dadurch gekennzeichnet, dass** die härtbare, plastisch verformbare Masse (20) transparent ist.

11. Kit nach Anspruch 9 oder 10, **dadurch gekennzeichnet, dass** die härtbare, plastisch verformbare Masse (20) im nicht gehärteten Zustand eine Konsistenz vom Typ 0,1 oder 2 gemäß ISO 4823:2000 aufweist.

12. Kit nach einem der Ansprüche 9 bis 11, **dadurch gekennzeichnet, dass** die härtbare, plastisch verformbare Masse (20) im gehärteten Zustand eine Endhärte von 40 bis 95 Shore A, vorzugsweise von 50 bis 90 Shore A und insbesondere von 60 bis 75 Shore A aufweist.

13. Kit nach einem der Ansprüche 9 bis 12, **dadurch gekennzeichnet, dass** der Objektträger (18; 34) zumindest eine im Wesentlichen glatte Oberfläche (36) aufweist, wobei auf der zumindest einen im Wesentlichen glatten Oberfläche (36) ein aufgerauter Bereich (38) vorhanden ist, der einen weiteren Bereich mit einer im Wesentlichen glatten Oberfläche (40) umschließt.

14. Kit nach einem der Ansprüche 9 bis 13, **dadurch gekennzeichnet, dass** die Abdeckung (22; 42) zumindest eine im Wesentlichen glatte Oberfläche (44) aufweist, wobei auf der zumindest einen im Wesentlichen glatten Oberfläche (44) ein aufgerauhter Bereich (46) vorhanden ist, der einen weiteren Bereich mit einer im Wesentlichen glatten Oberfläche (48) umschließt.

15. Kit nach Anspruch 13 und 14, **dadurch gekennzeichnet, dass** der aufgerauhte Bereich (38; 46) des Objektträgers (18; 34) und der Abdeckung (22; 42) in Form und Größe im wesentlichen identisch sind.

16. Kit nach einem der Ansprüche 9 bis 15, **dadurch gekennzeichnet, dass** der Objektträger (18; 34) und die Abdeckung (22; 42) in Form und Größe im Wesentlichen identisch sind.

## Claims

1. A method for preparing a tissue sample for confocal laser scanning microscopy, comprising the following steps:
1.) providing a tissue sample (13, 13', 13")
2.) if necessary, cutting of the tissue sample (13, 13', 13")
3.) Applying the tissue sample to a object slide (18; 34)
4.) Applying a cover (22; 42) over the tissue sample (13, 13', 13"), wherein the cover (22; 42) is connected to the slide (18; 34) by means of a hardenable, plastically deformable mass (20),
5.) pressing the cover (22; 42) onto the tissue sample (13, 13', 13") with a predetermined force, and
6.) Hardening of the plastically deformable mass (20), while maintaining the pressure of step 5,
wherein the hardenable, plastically deformable mass (20) is selected from the hardenable silicones and the hardenable polyethers, in particular selected from the A-silicones and the K-silicones.

2. Method according to claim 1 **characterized in that** the hardenable, plastically deformable mass (20) is transparent.

3. Process according to claim 1 or 2, **characterized in that** the force exerted in step 5 and step 6 is less than 5 N, preferably less than 2 N, even more preferably less than 1 N and in particular lies between 0.1 and 0.6 N.

4. Method according to one of claims 1 to 3, **characterized in that** the hardenable, plastically deformable mass (20) has a consistency of type 0, 1 or 2 according to ISO 4823:2000 in the unhardened state.

5. Method according to one of claims 1 to 4, **characterized in that** the hardenable, plastically deformable mass (20) in the hardening state has a final hardness of 40 to 95 Shore A, preferably of 50 to 90 Shore A and in particular of 60 to 75 Shore A.

6. Method according to any one of claims 1 to 5, **characterized in that** the tissue sample (13, 13', 13") comprises skin tissue.

7. Method according to one of claims 1 to 6, **characterized in that** it comprises, after step 3), a further step 3.a) of wetting the sample with a liquid, preferably water or oil.

8. Method for examining tissue samples comprising the steps of preparing a tissue sample (13, 13', 13") according to the method according to one of claims 1 to 7 and examining the prepared tissue sample (13, 13', 13") by means of confocal laser scanning microscopy.

9. Kit for preparing a tissue sample for confocal laser scanning microscopy, comprising:
- a hardenable, plastically deformable mass (20) selected from hardenable silicones and hardenable polyethers, in particular selected from A silicones and K silicones, and
- an instruction (50) for carrying out the method according to any of claims 1 to 8,
- at least one object slide (18; 34), and
- at least one cover (22; 42).

10. Kit according to claim 9, **characterized in that** the hardenable, plastically deformable mass (20) is transparent.

11. A kit according to claim 9 or 10, **characterized in that** the hardenable, plastically deformable mass (20) has a consistency of type 0, 1 or 2 according to ISO 4823:2000 in the unhardened state.

12. Kit according to any one of claims 9 to 11, **characterized in that** the hardenable, plastically deformable mass (20) has a final hardness of 40 to 95 Shore A, preferably of 50 to 90 Shore A and in particular of 60 to 75 Shore A in the hardened state.

13. Kit according to one of claims 9 to 12, **characterised in that** the object slide (18; 34) has at least one substantially smooth surface (36), wherein a roughened region (38) is provided on the at least one substantially smooth surface (36) is present, which encloses a further area with a substantially smooth surface (40).

14. Kit according to any one of claims 9 to 13, **characterized in that** the cover (22; 42) has at least one substantially smooth surface (44), wherein on the at least one substantially smooth surface (44) there is a roughened area (46) which encloses a further area with a substantially smooth surface (48).

15. Kit according to claim 13 and 14, **characterized in that** the roughened area (38; 46) of the object slide (18; 34) and the cover (22; 42) are substantially identical in shape and size.

16. A kit according to any one of claims 9 to 15, **characterized in that** the slide (18; 34) and the cover (22; 42) are substantially identical in shape and size.

## Revendications

1. Procédé de préparation d'un échantillon de tissu pour la microscopie confocale à balayage laser, qui comprend les étapes suivantes :
1.) mise à disposition d'un échantillon de tissu (13, 13', 13")
2.) le cas échéant, découpe de l'échantillon de tissu (13, 13', 13")
3.) Application de l'échantillon de tissu sur une lame (18 ; 34)
4.) Application d'un couvercle (22 ; 42) sur l'échantillon de tissu (13, 13', 13"), le couvercle (22 ; 42) étant relié au porte-objet (18 ; 34) au moyen d'une masse (20) durcissable et déformable plastiquement,
5.) presser le couvercle (22 ; 42) sur l'échantillon de tissu (13, 13', 13") avec une force prédéterminée, et
6.) Durcissement de la masse plastiquement déformable (20), tout en maintenant la pression de l'étape 5, ,
la masse plastiquement déformable durcissable (20) étant choisie parmi les silicones durcissables et les polyéthers durcissables, en particulier étant choisie parmi les silicones A et les silicones K.

2. Procédé selon la revendication 1, **caractérisé en ce que** la masse durcissable plastiquement déformable (20) est transparente.

3. Procédé selon la revendication 1 ou 2, **caractérisé en ce que** la force exercée à l'étape 5 et à l'étape 6 est inférieure à 5 N, de préférence inférieure à 2 N, plus préférentiellement inférieure à 1 N et notamment comprise entre 0,1 et 0,6 N.

4. Procédé selon l'une des revendications 1 à 3, **caractérisé en ce que** la masse durcissable plastiquement déformable (20) présente, à l'état non durci, une consistance de type 0, 1 ou 2 selon la norme ISO 4823:2000.

5. Procédé selon l'une des revendications 1 à 4, **caractérisé en ce que** la masse (20) durcissable, déformable plastiquement, présente à l'état durci une dureté finale de 40 à 95 Shore A, de préférence de 50 à 90 Shore A et en particulier de 60 à 75 Shore A.

6. Procédé selon l'une des revendications 1 à 5, **caractérisé en ce que** l'échantillon de tissu (13, 13', 13") comprend du tissu cutané.

7. Procédé selon l'une des revendications 1 à 6, **caractérisé en ce qu'**il comprend, après l'étape 3.), une étape supplémentaire 3.a.) de mouillage de l'échantillon avec un liquide, de préférence de l'eau ou une huile.

8. Procédé d'examen d'échantillons de tissu comprenant les étapes de préparation d'un échantillon de tissu (13, 13', 13") selon le procédé de l'une des revendications 1 à 7 et d'examen de l'échantillon de tissu préparé (13, 13', 13") au moyen d'une microscopie confocale à balayage laser.

9. Kit de préparation d'un échantillon de tissu pour la microscopie confocale à balayage laser, qui comprend :
- une masse (20) durcissable, plastiquement déformable, choisie parmi les silicones durcissables et les polyéthers durcissables, notamment choisie parmi les silicones A et les silicones K, et
- un guide (50) pour la mise en œuvre du procédé selon l'une des revendications 1 à 8,
- au moins une lame (18 ; 34), et
- au moins un couvercle (22 ; 42).

10. Kit selon la revendication 9, **caractérisé en ce que** la masse durcissable plastiquement déformable (20) est transparente.

11. Kit selon la revendication 9 ou 10, **caractérisé en ce que** la masse plastiquement déformable durcissable (20) présente, à l'état non durci, une consistance de type 0,1 ou 2 selon la norme ISO 4823:2000.

12. Kit selon l'une des revendications 9 à 11, **caractérisé en ce que** la masse durcissable plastiquement déformable (20) présente à l'état durci une dureté finale de 40 à 95 Shore A, de préférence de 50 à 90 Shore A et en particulier de 60 à 75 Shore A.

13. Kit selon l'une quelconque des revendications 9 à 12, **caractérisé en ce que** la lame (18 ; 34) présente au moins une surface sensiblement lisse (36), une zone rugueuse (38) étant présente sur ladite au moins une surface sensiblement lisse (36), ladite zone rugueuse entourant une autre zone présentant une surface sensiblement lisse (40).

14. Kit selon l'une quelconque des revendications 9 à 13, **caractérisé en ce que** le couvercle (22 ; 42) comprend au moins une surface sensiblement lisse (44), une zone rugueuse (46) étant présente sur ladite au moins une surface sensiblement lisse (44), ladite zone rugueuse entourant une autre zone ayant une surface sensiblement lisse (48).

15. Kit selon les revendications 13 et 14, **caractérisé en ce que** la zone rugueuse (38 ; 46) de la lame (18 ; 34) et du couvercle (22 ; 42) sont sensiblement identiques en forme et en taille.

16. Kit selon l'une quelconque des revendications 9 à 15, **caractérisé en ce que** la lame (18 ; 34) et le couvercle (22 ; 42) sont sensiblement identiques en forme et en taille.
